Europäisches Patentamt

European Patent Office

Office européen des brevets

(11) Publication number: **0 364 179**
**A2**

# EUROPEAN PATENT APPLICATION

(21) Application number: 89310276.4

(51) Int. Cl.⁵: **G06F 15/401**

(22) Date of filing: **06.10.89**

(30) Priority: **11.10.88 US 255336**

(43) Date of publication of application:
**18.04.90 Bulletin 90/16**

(84) Designated Contracting States:
**BE DE FR GB IT LU NL**

(71) Applicant: **NeXT INC.**
**900 Chesapeake Drive**
**Redwood City California 94063(US)**

(72) Inventor: **Hawley, Michael J.**
**665 Woodland Avenue**
**Menlo Park California 94025(US)**

(74) Representative: **Hartley, David**
**Withers & Rogers 4 Dyer's Buildings Holborn**
**London, EC1N 2JT(GB)**

(54) Method and apparatus for extracting keywords from text.

(57) A method and apparatus for extracting keywords automatically from files, which can be useful in retrieving files in large file systems, are provided. The frequency of occurrence of each word in a file, as compared to the frequency of occurrence of other words in the file, is calculated. If the calculated frequency exceeds by some predetermined threshold the frequency of occurrence of that same word in a reference domain appropriate to the file, then the word is selected as a keyword for that file.

EP 0 364 179 A2

## METHOD AND APPARATUS FOR EXTRACTING KEYWORDS FROM TEXT

### Background of the Invention

This invention relates to file indexing systems. More particularly, this invention relates to the automatic indexing of text files in a computer file system based on file content.

Computer operating systems typically provide file directories which list for a user all files stored in the file system (e.g., disk memory) of the computer. It is up to the user to know, based on the file titles, which files he is interested in. As the number of files increases, it becomes more difficult to scan all of the file titles quickly and efficiently. Although most operating systems allow directories to be divided further into subdirectories, each of which contains only a fraction of the total number of files in the file system, it is then necessary to know which subdirectory to scan, and it is still necessary to scan the subdirectory by file title. The problem is compounded if the computer is connected to a network and has access not only to its own file storage systems, but to all those on the network.

In addition, when an application program must access a file, there is no way for it to determine on its own which file to access. The file titles give no indication to the program of the file content. Instead, the file title or at least some portion of it must be specified to the program. Even if the file was created by the program itself and has a title with a particular format, it is only because the program is designed to look for that format that it can find the file.

Database programs are known which will index files based on keywords selected from the file contents. A user of such a program need only make a query based on one of those keywords, and the program will find all files indexed under that keyword. The user then need select only from among the relatively small number of files selected from the index. However, in order to index files for use in such a database, the keywords must be manually entered or flagged in some way.

It is also possible to index text files by listing every word that occurs in the file, but such an index would be as large as the file itself, and thus would not be useful. Such an index could ignore common words such as "a", "the", "to", "be", and "not", but an index constructed according to such rules would not be useful for, e.g., finding Hamlet's soliloquy in a set of files containing the complete works of William Shakespeare.

It would be desirable to be able to provide a way for both users of, and application programs running on, a computer system, to be able to select from among many files (e.g., over 40,000 files on a 250 megabyte disk) in a computer file system based on keywords which are selected from the files by the computer system itself.

### Summary of the Invention

It is an object of this invention to provide a way for both users of, and application programs running on, a computer system, to be able to select from among many files in a computer file system based on keywords which are selected from the files by the computer system itself.

In accordance with this invention, there is provided apparatus for extracting keywords from text, the text being stored in a machine-readable format, words in the text being part of a domain. The apparatus includes first storage means for storing expected frequencies of occurrence of words in the domain, means for reading the text and determining actual frequencies of occurrence of words in the text, and means for comparing the actual frequencies of words in the text to their expected frequencies, and designating a word as a keyword if its actual frequency bears a predetermined relationship to its expected frequency (e.g., if the actual frequency exceeds the expected frequency by at least a predetermined threshold amount).

A method for extracting keywords is also provided.

### Brief Description of the Drawings

The above and other objects and advantages of the invention will be apparent upon consideration of the following detailed description, taken in conjunction with the accompanying drawings, in which like reference characters refer to like parts throughout, and in which:

FIG. 1 is a representation of a hypothetical histogram of the occurrence of words in the English language;

FIG. 2 is a representation of a hypothetical histogram of the occurrence of words in a particular text file;

FIG. 3 is a flow diagram of the process according to the invention for extracting keywords from text files; and

FIG. 4 is a block diagram of an exemplary hardware configuration on which the system and method of the invention is implemented.


Detailed Description of the Invention

The present invention facilitates the indexing of files or, more specifically, the retrieval of files, by automatically selecting from each file a plurality of keywords. To find the file, one would initiate a search request based on words which one thought would be descriptive of the subject matter of the file being sought. If the keyword extraction were performed properly, those words would be among those that were selected, and would allow the file to be found and weighted. As a result, the search request would retrieve a relatively short weighted list of files for which the words used in the search request had been designated as keywords. The user, or application program, would then have to select only from among those files, rather than from among all of the files in the file system. An indexing and retrieval system of the type with which the present invention may be used is described in copending, commonly-assigned United States patent application Serial No.     (NX-12), filed concurrently herewith.

Keyword extraction according to the invention is based on a statistical analysis of the occurrence of words in some large domain. For example, for most text files generated in the United States, the base domain might be "Common American English". On the other hand, if the text files represented the source code for computer programs in a particular programming language, the base domain would be the reserved words used in that programming language. Similarly, in the Shakespeare example given above, the domain might be "Elizabethan English". The reason for basing keyword extraction on a particular domain will be discussed below.

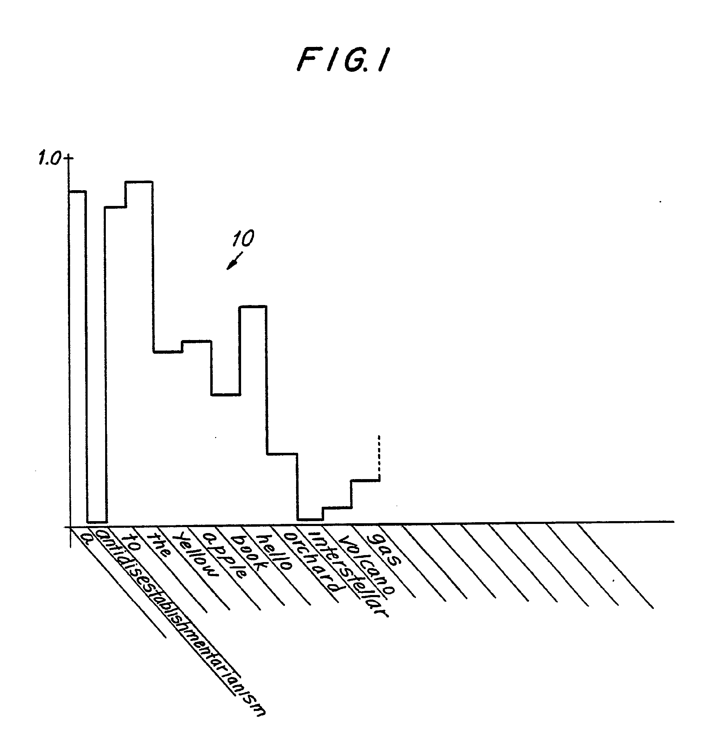

For every domain to be used, a statistical analysis of the "normal" occurrence of words in that domain will have been performed. The results of that analysis can, if desired, be represented as a histogram, such as histogram 10 in FIG. 1, which is a partial hypothetical histogram of the occurrence of words in common American English. Histogram 10 is normalized, and shows only the relative occurrences of words, without attempting to give any absolute values for their rate of occurrence. However, the present invention can also be implemented using actual unnormalized occurrence and frequency data as opposed to relative occurrence and frequency data.

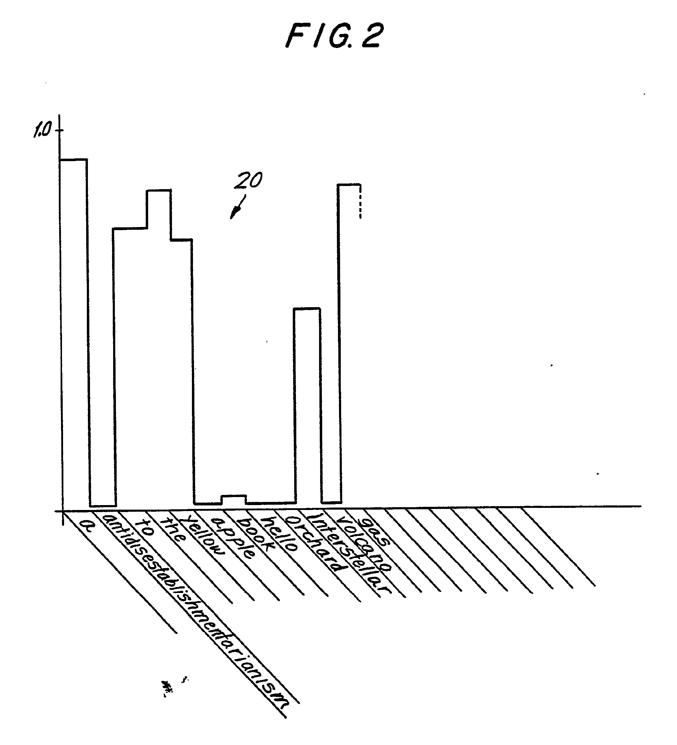

When a file is processed for keyword extraction, a similar histogram is constructed for the words in the file. For example, histogram 20 in FIG. 2 is a histogram of the occurrence of words in an article on astronomy. A ratio is taken between the frequency of occurrence of a word in the file and its frequency of occurrence in the selected domain. If that ratio exceeds unity by some predetermined threshold, which threshold allows for some statistical variation in occurrences of words then that word is selected as a keyword. In the example of histogram 20, the words "yellow", "interstellar", and "gas" appear more often than in common English. Thus those words might be selected as keywords, if the ratios of their frequencies of occurrence in the file to their frequencies of occurrence in the domain of common English exceed unity by a sufficient amount, which is predetermined according to, e.g., the type of file or the volume of output index terms desired.

The importance of selecting the correct domain for keyword extraction analyses should thus be clear. If a file belongs to a class in which words are not used as they are in common English, words that are common in the class but uncommon in common English will be extracted erroneously as keywords. For example, if keywords were to be extracted from Shakespearean works using common English as the domain, many Elizabethan pronoun forms and other archaic forms would be selected which would be of little value in finding a particular work of Shakespeare. One such archaic form is the word "anon" which occurs with relatively high frequency in Elizabethan literature, but with low frequency (and a different meaning) in common English. "Anon" may seem curious to a contemporary speaker, but a reader of Shakespeare would dismiss it as being common in that domain.

However, once keywords have been extracted, all files can be queried by entering the words on which one wants to search. If the word in question is a keyword for the file being sought, it will have been selected using the proper domain at the time that the keywords were extracted. At the time of search, the user need not be concerned with domains.

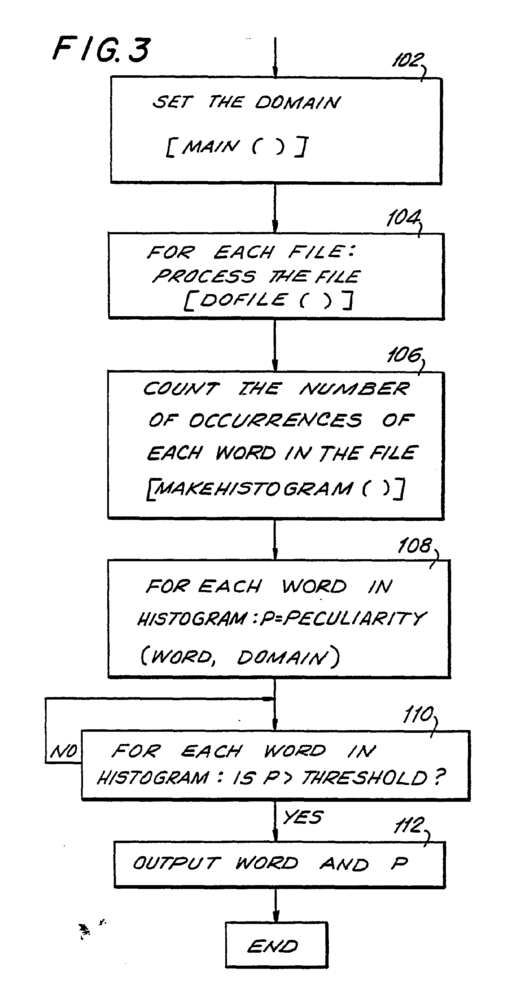

Suitable computer programs for implementing this invention are provided in the Appendix at the end of this specification. These computer programs are written in the well-known C programming language and can be performed on many conventional computers such as a conventional Model 3/50 work-station available from Sun Microsystems, Inc. of Mountain View, California. A flow diagram for these programs is shown in FIG. 3 and described below.

As shown in FIG. 3, the program is performed whenever a list of keywords is to be extracted from a file. In step 102 the domain to which the file is to be compared is selected by performing the main program shown in the Appendix. Each domain is represented by a previously computed histogram, typically made by counting the occurrences of words in a large sample of documents or files of a type generally similar to the file type about to be processed in accordance with this invention. In the default case, the domain is an approximation of the frequency of occurrence of various words in contemporary usage of the English language.

In step 104 each file is processed using the "dofile" routine shown in the Appendix. As part of the execution of the "dofile" routine, the "makeHistogram" routine (also shown in the Appendix) is performed. As shown in step 106, the "makeHistogram" routine counts the number of occurrences of each word in the file. A list of words not to be counted (e.g., words like "a", "the", "and", etc.) can be provided in the "FunctionWord" list referred to in the "makeHistogram" routine. The "FunctionWord" list is checked before a word is counted if the "StopList" flag (also referred to in the "makeHistogram" routine) is set. The "ShowPlurals" test referred to in the "makeHistogram" routine determines whether or not plural words (e.g., "automobiles") will be counted separately or with the singular form of the same word (e.g., "automobile"). Other similar word form tests can be performed if desired (e.g., to determine whether or not various verb forms are counted separately or as one root word). The enter instruction near the end of the "makeHistogram" routine actually counts the word (if it is to be counted as determined above).

After the histogram for a file has been made as described above, step 108 in FIG. 3 is performed. In this step the peculiarity p of each word in the file is determined by comparing the frequency of occurrence of that word in the file to the frequency of occurrence of the same word in the selected domain. In the "dofile" routine, the statement "p = Frequency?..." sets p equal to either the raw count of occurrences of the word in the file, or to the result of the performance of the "wordPeculiarity" routine found in the Appendix. It is the latter choice which is made in accordance with this invention. Accordingly, the "wordPeculiarity" routine is performed for each word in the histogram which has been made for the file. The last statement in the "wordPeculiarity" routine returns to the "dofile" routine a value determined by the following quotient:

$$\frac{(\text{count of word in file}/\text{total number of words in file})}{(\text{count of word in domain}/\text{total number of words in domain})}$$

The "dofile" routine sets p for the word being considered equal to this value returned from the "wordPeculiarity" routine.

In step 110 the "dofile" routine continues by comparing the value of p for each word to a predetermined threshold value. For example, the threshold value may be 1 if any word occurring in the file at least as frequently as it occurs in the domain is to be output as a keyword. If the identification of keywords is to be made more selective (fewer keywords to be output), the threshold value is made greater than 1. If the value of p for a particular word exceeds whatever threshold value has been selected, then in step 112 that word and its p value are output to a list of keywords and associated p values for the file being processed.

## Hardware System

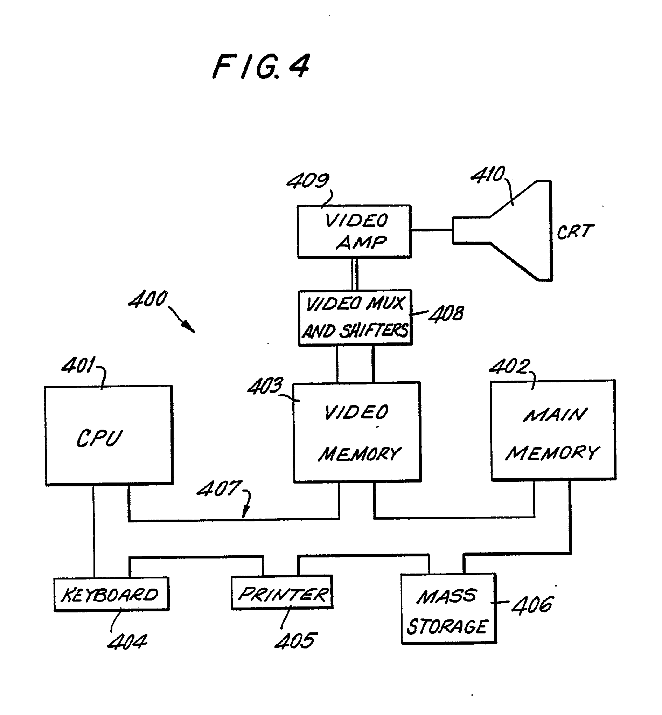

While the present invention may advantegeously be implemented on nearly any computer system, an exemplary hardware system 400 on which the present invention is implemented is shown in FIG. 4.

FIG. 4 shows a preferred embodiment of a hardware system 400 implementing the present invention as part of a computer system. In FIG. 4, system 400 includes CPU 401, main memory 402, video memory 403, a keyboard 404 for user input, printer 405, and mass storage 406 which may include both fixed and removable media using any one or more of magnetic, optical or magneto-optical storage technology or any other available mass storage technology and in which the files from which keywords are to be extracted are stored (the files can be entered from keyboard 404 or directly into mass storage 406 on removable media; if system 400 is part of a network of computer systems, the file system might include all or part of the mass storage available on other systems on the network). These components are interconnected via conventional

4

bidirectional system bus 407. Bus 407 contains 32 address lines for addressing any portion of memory 402 and 403. System bus 407 also includes a 32 bit data bus for transferring data between and among CPU 401, main memory 402, video memory 403, and mass storage 406. In the preferred embodiment of system 400, CPU 401 is a Motorola 68030 32-bit microprocessor, but any other suitable microprocessor or microcomputer may alternatively be used. Detailed information about the 68030 microprocessor, in particular concerning its instruction set, bus structure, and control lines, is available from MC68030 User's Manual, published by Motorola Inc., of Phoenix, Arizona.

Main memory 402 of system 400 comprises eight megabytes of conventional dynamic random access memory, although more or less memory may suitably be used. Video memory 403 comprises 256K bytes of conventional dual-ported video random access memory. Again, depending on the resolution desired, more or less such memory may be used. Connected to a port of video memory 403 is video multiplex and shifter circuitry 408, to which in turn is connected video amplifier 409. Video amplifier 409 drives cathode-ray tube (CRT) raster monitor 410. Video multiplex and shifter circuitry 408 and video amplifier 409, which are conventional, convert pixel data stored in video memory 403 to raster signals suitable for use by monitor 410. Monitor 410 is of a type suitable for displaying graphic images having a resolution of 1120 pixels wide by 832 pixels high.

According to the invention, each file from which keywords are to be extracted is read into main memory 402 from mass storage 406 (or from keyboard 404) and the process diagrammed in FIG. 3 is carried out on it. The resulting keywords are written to index files stored in mass storage 406, and may also be displayed as a list on monitor 410 or printed as a list on printer 405.

Thus it is seen that a method and apparatus for extracting keywords automatically from files, which can be useful in retrieving files in large file systems, are provided. One skilled in the art will appreciate that the present invention can be practiced by other than the described embodiments, which are presented for purposes of illustration and not of limitation, and the present invention is limited only by the claims which follow.

## Claims

1. Apparatus for extracting keywords from text, said text being stored in a machine-readable format, words in said text being part of a domain, said apparatus comprising:
first storage means for storing expected frequencies of occurrence of words in said domain;
means for reading said text and determining actual frequencies of occurrence of words in said text; and
means for, for a word in said text, comparing said actual frequency to said expected frequency, and designating said word as a keyword if its actual frequency bears a predetermined relationship to its expected frequency.

2. The apparatus of claim 1 further comprising means for selecting said domain.

3. The apparatus of claim 2 wherein said domain is the English language.

4. The apparatus of claim 2 wherein said domain is a selected subset of the English language.

5. The apparatus of claim 1 wherein said comparing and designating means designates said word as a keyword if its actual frequency exceeds its expected frequency by at least a predetermined threshold amount.

6. A method for extracting keywords from text, said text being stored in a machine-readable format, words in said text being part of a domain, said method comprising the steps of:
storing expected frequencies of occurrence of words in said domain;
reading said text and determining actual frequencies of occurrence of words in said text; and
for a word in said text, comparing said actual frequency to said expected frequency, and designating said word as a keyword if its actual frequency bears a predetermined relationship to its expected frequency.

7. The method of claim 6 further comprising selecting said domain.

8. The method of claim 7 wherein said domain is the English language.

9. The method of claim 7 wherein said domain is a selected subset of the English language.

10. The method of claim 6 wherein said word is designated as a keyword if its actual frequency exceeds its expected frequency by at least a predetermined threshold amount.

# FIG. 1

# FIG. 2

# FIG. 3

```
                                                    102
          ┌────────────────────────────┐
          │      SET  THE  DOMAIN       │
          │                            │
          │      [ MAIN ( ) ]          │
          └────────────────────────────┘
                        │
                        ▼                            104
          ┌────────────────────────────┐
          │   FOR  EACH  FILE:          │
          │   PROCESS THE FILE          │
          │   [DOFILE ( )]             │
          └────────────────────────────┘
                        │
                        ▼                            106
          ┌────────────────────────────┐
          │   COUNT  THE  NUMBER        │
          │   OF OCCURRENCES  OF        │
          │   EACH WORD IN THE FILE     │
          │   [MAKEHISTOGRAM ( )]      │
          └────────────────────────────┘
                        │
                        ▼                            108
          ┌────────────────────────────┐
          │   FOR EACH  WORD  IN        │
          │   HISTOGRAM : P=PECULIARITY │
          │   (WORD,  DOMAIN)           │
          └────────────────────────────┘
                        │
       ┌────────────────┤
       │                ▼                            110
     NO │  ┌────────────────────────────┐
       └──│  FOR  EACH  WORD  IN         │
          │  HISTOGRAM : IS P > THRESHOLD ? │
          └────────────────────────────┘
                        │ YES
                        ▼                            112
          ┌────────────────────────────┐
          │   OUTPUT  WORD  AND  P      │
          └────────────────────────────┘
                        │
                        ▼
                  ┌──────────┐
                  │   END    │
                  └──────────┘
```

# F I G. 4

Appendix

## pword.c                                                            1

```c
/* print the "peculiar" words in a document. */
#include <stdio.h>
#include <ctype.h>
#define Case break; case
#define Default break; default
#define Int register int
#define Char register char
static char *_arg, *_argp; /* use by 'for_each_argument */
static char *av0;        /* will hold name of the command */
#define argument  (_arg=(*_argp? _argp : av[++i==ac? --i : i]),_argp+=strlen(_argp),_arg
)
#define for_each_argument av0 = av[0]; for (i=1;i<ac && *av[i]=='-';i++)\
                     for (_argp = &av[i][1]; *_argp;)\
                           switch(*_argp++)


typedef struct Word {
        char *s;
        int n;
        short rank;
        struct Word *next;        /* the next entry in the chained list */
} Word;


#define HASHSIZE 5021    /* make it almost any size if you like */
#define MAXWORDS 16384   /* big enough for all the unique words in Moby Dick */
Word *table[HASHSIZE];   /* the hash table */
Word *all[MAXWORDS];
int NumWords=0;          /* number of words in 'all' */
char *malloc();


typedef struct {
        char *s;
        float n;
} Pair;
#define MAXPAIR 4000
Pair pair[MAXPAIR];

FreeWord(w) Word *w; {
        free(w->s);
}

reset(){ /* empty the hash table */
        int i;
        if (NumWords==0) return;
        for (i=0;i<NumWords;i++){
                FreeWord(all[i]);
                all[i] = (Word *)0;
        }
        for (i=0;i<HASHSIZE;i++)
                table[i] = (Word *)0;
        /*bzero(table,HASHSIZE*sizeof(Word *));*/
        NumWords = 0;
}

compare(a,b) Word **a,**b; {
        int A= (*a)->n,
            B= (*b)->n;
        return A>B? -1 : A<B;
}

sort(){ /* sort the table of words by frequency */
        qsort(all,NumWords,sizeof(char *),compare);
}
```

```
hash(s) char *s; {
        int h = *s;
        for (;*s;h+=(*s)*(*(++s)));
        return h%HASHSIZE;
}

Word *
lookup(s)
        char *s;
{
        Word *e = table[hash(s)];
        for (;e;e=e->next)
                if (!strcmp(s,e->s))
                        return e;
        return (Word *)NULL;
}

char *strcpy();
#define save(s) strcpy(malloc(strlen(s)+1),s)

Word *
enter(s)
        char *s;
{
        extern Word *lookup();
        extern char *malloc();
        register Word *e;
        int h;

    /* If s is not already in the table, save it there. */
        if (!(e=lookup(s))) {
                if ((e = (Word *) malloc(sizeof(*e))) == NULL) {
                        fprintf(stderr, "Oops!  Couldn't make hash entry\n");
                        return e;
                }
                h = hash(e->s = save(s));
                e->n = 1;
                e->rank = 0;
                e->next = table[h];
                table[h] = e;
                if (NumWords >= MAXWORDS) {
                    static int warned = 0;
                    if (!warned)
                      fprintf(stderr,"ouch! > %d unique words\n",MAXWORDS);
                    warned = 1;
                } else
                        all[NumWords++] = e;
        } else
                e->n++;
        return e;
}

char *
lower(s) char *s; {
        char *start = s;
        while (*s){
                if (isupper(*s)) *s = tolower(*s);
                ++s;
        }
        return start;
}

long atol();
double atof();
```

## pword.c                                                                    2

```
long WindowSize = 0;
long WindowIncrement = 0;
int Head = 9999;            /* print topmost 'Head' peculiar words */
float Threshold = 1.0;      /* print all words with peculiarity above Threshhold */
int Contraction = 0;        /* count contractions as whole words */
int Frequency = 0;          /* print normalized frequency, not peculiarity */
int Fold = 1;               /* fold all words to lower case */
int Beginning = 1;          /* true if next char is first in file */
int Minimum = 2;            /* minimum # of repetitions of a word */
int ShowPlurals = 0;        /* if 1, don't fold plurals to singular */
int WordFirst = 0;          /* if 1, print word first instead of weight */
int StopList = 1;           /* if 1, strip out function words */

char *fbuf, *bufp;          /* file buffer, pointer to next input char */
long nbuf;                  /* number of unread chars left at bufp */
int FD = -1;

FillWindow(){
        if (WindowSize){
                int n;
                if (FD == -1) return 0;
                if (!fbuf){
                        fbuf = malloc(WindowSize+1);
                        if (!fbuf) e("%s: no memory!",av0), exit(1);
                        bufp = fbuf;
                }
                nbuf = WindowSize - (bufp-fbuf);
                n = read(FD,bufp,nbuf);
                if (n<0) e("%s: read error",av0), exit(1);
                if (n<nbuf) FD = -1;
                nbuf = (bufp-fbuf) + n;
                bufp = fbuf;
                return 1;
        } else
                return FD != -1;
}

ShiftWindow(){
        if ((bufp-fbuf)==WindowSize){
                bcopy(fbuf+WindowIncrement,fbuf,WindowSize-WindowIncrement);
                bufp = fbuf+WindowIncrement;
        } else {
                FD = -1;
                bufp = fbuf;
        }
}

static char charbuf[1024], *charp = charbuf;
static int charleft = 0;
static char ungot = 0;

get(f){
        if (ungot){
                char c = ungot;
                ungot = 0;
                return c;
        }
        if (f<0) return 0;
        if (charleft){
                charleft--;
                return *charp++;
        }
        charleft = read(f,charbuf,sizeof charbuf);
        charp=charbuf;
```

```
        if (charleft<=0){
                charleft=0;
                return 0;
        }
        charleft--;
        return *charp++;
}

C(){    /* get the next input char and return it */
        char c = 0;
        if (!fbuf) c=get(FD);
        if (nbuf>0){
                nbuf--;
                c = *bufp++;
        }
        if (!c && !fbuf) FD = -1;
        return c;
}

next(){ /* peek at the next input char */
        if (!ungot) ungot = get(FD);
        return ungot;
}

#define letter(c) (isalpha(c)||(Contraction && (c=='\''||c=='-') && isalpha(next())))

char *
getword(s) char *s; {
        char *singular();
        char c, *start = s;
        while ((c=C()) && !isalpha(c)); /* flush delimiting text */
        if (!c) return (char *)0;
        do
                *s++ = c;
        while ((c=C()) && letter(c)) ;
        *s = '\0';
        if (!c) return (char *)0;          /* ignore the last fragment */
        if (*start && !*(start+1)) return getword(start);
        if (*start && Fold) lower(start);
        return *start? start : (char *)0;
}

makeHistogram(){
        char s[512],*p;
        if (!Beginning) getword(s);
        Beginning = 0;
        while (getword(s)){
                if (StopList && isFunctionWord(s)) continue;
                if (!ShowPlurals) strcpy(s,singular(s));
                enter(s);
        }
        sort();          /* sort into descending order */
}

count(s) char *s; {      /* word count of 's' in current histogram */
        Word *e = lookup(s);
        return e? e->n : 0;
}

pcompare(a,b) Pair *a, *b; {
        return a->n > b->n? -1 : a->n < b->n;
}

printwords(n){
```

## pword.c                                                                       3

```c
        int i;
        float M;
        qsort(pair,n,sizeof(Pair),pcompare);
        n = (n<Head)? n : Head;
        if (n) M = (float)pair[0].n;
        for (i=0;i<n;i++)
            if (WordFirst)
                printf("%s %1.6f\n",pair[i].s, ((float)(pair[i].n))/M);
            else
                printf("%1.6f %s\n", ((float)(pair[i].n))/M,pair[i].s);
}

#include <wftable.h>
WFTable *Domain;
extern WFTable DefaultEnglish;

dofile(f){
        int i,n,c,j;
        char *s;
        int printed=0;
        int separator=0;
        int min;
        float p;

        FD = f;
        Beginning = 1;

        while (FillWindow()){
                printed=0;
                if (separator){
                        reset();
                        printf("-----------------\n");
                }
                makeHistogram(); /* compute the histogram */
                n = NumWords;
                min = (NumWords<50)? 1 : Minimum;       /* hack... */
                for (i=j=0; i<n; i++){
                        s=all[i]->s;
                        c=count(s);
                        p=Frequency? (float)c : (float)(wordPeculiarity(s,c,n,Domain)*c)
/(float)n;
                        if (c>=min && p>=Threshold){ /* ?? */
                                pair[j].s=s;
                                pair[j].n = p;
                                j++;
                        }
                }
                printwords(j);
                ShiftWindow();
                separator++;
        }
}

doFile(s,printname) char *s; {
        int f = open(s,0);
        if (!f) return perror(s);
        if (printname) printf("-----------------\n%s:\n-----------------\n",s);
        dofile(f);
        close(f);
        if (printname) reset();
}

e(a,b,c,d){ fprintf(stderr,a,b,c,d); fprintf(stderr,"\n"); }
```

```
use() {
  e("use: %s [-n#] [-m#] [-cfpwS] [-t#] [-s#] [-i#] [file]",av0);
  e("-n   set number of p-words returned to # (default all)");
  e("-m   only consider words that are repeated at least # (2) times");
  e("-c   count contraction's and hyphenated-words as single words");
  e("-f   print internal document frequency rather than peculiarity");
  e("-p   don't fold plurals to singular form");
  e("-w   write output as 'word weight' rather than 'weight word'");
  e("-S   don't use stop list");
  e("-t   set the threshold of peculiarity to #");
  e("-s   set window size to # (default - whole file)");
  e("-i   set window increment to # (default - window size/2)");
  exit(1);
}

main(ac,av) char *av[]; {
        int i,printname;
        WFTable *readWFTable(), *DefaultLanguageWFTable();

        for_each_argument{
        Case 's': WindowSize = atol(argument);
        Case 'i': WindowIncrement = atol(argument);
        Case 'n': Head = atoi(argument);
        Case 't': Threshold = atof(argument);
        Case 'm': Minimum = atoi(argument);
        Case 'c': Contraction = !Contraction;
        Case 'f': Frequency = !Frequency;
        Case 'p': ShowPlurals = !ShowPlurals;
        Case 'w': WordFirst = !WordFirst;
        Case 'S': StopList = !StopList;
        Case 'l': Domain = readWFTable(argument);
        Default : use();
        }

        if (!WindowIncrement) WindowIncrement = WindowSize/2;
        if (!Domain) Domain = DefaultLanguageWFTable();
        printname=(ac-i)>1;
        if (i==ac) dofile(fileno(stdin));
        else for (;i<ac;i++) dofile(av[i],printname);

}
```

## wftable.c 1

```c
/*
 * Word frequency table utilities:
 *
 *      readWFTable(file)
 *      writeWFTable(t,file), writeWFTableCode(t,file,name)
 *      freeWFTable(t)
 *      wordStat(word,t,&rank)
 *          wordCount(word,t)
 *          wordRank(word,t)
 *      wordFrequency(word,t)
 *      wordPeculiarity(word,count,total,t)
 */
#include "wftable.h"
#include <stdio.h>
#include <sys/param.h>

static
hashWFTable(s,t)
        register char *s;
        register WFTable *t;
{
        register int h;
        for(h= *s;*s;h+= *s*(1+ *(++s)));
        return h&t->tableSize;
}

typedef struct Word {
        char *s;
        int length;
        long count;
        long rank;
        struct Word *next;
} Word;

#define Alloc(x) (x *)calloc(1,sizeof(x))
#define Free(x)  if (x) free(x)
char *malloc(), *calloc();
static long numWords, totalCount, textSize;

static Word *
makeWord(s,c)
        char *s;
        long c;
{
        Word *w = Alloc(Word);
        int n;
        if (w){
                w->s = malloc(n=strlen(s)+1);
                if (w->s){
                        strcpy(w->s,s);
                        numWords++;
                        w->rank = numWords;
                        w->count = c;
                        textSize += (w->length = n);
                        w->next = (Word *)0;
                } else
                        return (Word *)0;
        }
        return w;
}

static
freeWord(w)
        register Word *w;
```

```
        {
                register Word *t;
                while (w){
                        t = w;
                        w = w->next;
                        free(t->s);
                        free(t);
                }
        }

static Word *
readWordList(file, fp)
        char *file;
        FILE *fp;
{
        FILE *f = fp? fp : fopen(file, "r");
        Word *start = (Word *)0, *p, *w;
        char s[256];
        long count;

        numWords = totalCount = textSize = 0;
        if (f){
            while (fscanf(f,"%s %ld", s, &count)==2 && (w = makeWord(s,count))){
                if (!start)
                        start = p = w;
                else {
                        p->next = w;
                        p = w;
                }
                totalCount += count;
            }
            if (f != fp) fclose(f);
        }
        return start;
}

WFTable *
makeWFTableFromHistogram(file, fp)
        char *file;
        FILE *fp;
/*
 * 'file' (or 'fp') is a word histogram file containing lines of the form
 *      word count
 *      ...
 * This routine makes a hashed WFtable from such a file.
 */
{
        WFTable *t = (WFTable *)0;
        Word *start = readWordList(file, fp), *w, **W, *p;
        register char *s;
        register long *l;
        register int i;

        if (!start) return t;

        t = Alloc(WFTable);
        if (!t) return t;

        t->total = totalCount;
        t->unique = numWords;
        t->tableSize = numWords/2;
        t->textSize = textSize + numWords*sizeof(long)*2 + t->tableSize;
        t->text = malloc(t->textSize);
```

wftable.c                                                                      2

```
        if (!t->text){
                free(t);
                return (WFTable *)0;
        }

        t->table = (long *)malloc(sizeof(long)*t->tableSize);
        if (!t->table){
                free(t);
                return (WFTable *)0;
        }

        /* load up table */
        W = (Word **)calloc(1,t->tableSize*sizeof(Word *));

        for (w=start; w;){
                int h;
                h = hashWFTable(w->s,t);
                p = w;
                w = w->next;
                p->next = W[h];
                W[h] = p;
        }

        /* build text vector and hash pointer table */
        for (i=0, s = t->text; i<t->tableSize; i++){
                t->table[i] = s - t->text;
                for (w=W[i]; w; w=w->next){
                        bcopy(w->s,s,w->length);
                        s += w->length;
                        l = (long *)s;
                        s += 2*sizeof(long);
                        *l++ = w->rank;
                        *l = w->count;

                        /*
                        bcopy(&(w->rank), s, sizeof(long));
                        s += sizeof(long);
                        bcopy(&(w->count), s, sizeof(long));
                        s += sizeof(long);
                        */
                }
                *s++ = '\0';
        }

        free(W);
        freeWord(start);

        return t;
}

char *
findWFTable(file)
        char *file;
/*
 * Look for the WFTable called 'file'.
 * If 'file' is accessible as given, return it,
 * otherwise look for 'file' or 'file.wf' in the index area.
 */
{
        extern char *IndexDir;
        static char path[MAXPATHLEN];
        if (access(file,0)==0) return file;
        sprintf(path, "%s/wf/%s",IndexDir,file);
        if (access(path,0)==0) return path;
```

```
        strcat(path,".wf");
        if (access(path,0)==0) return path;
        return file;
}

WFTable *
readWFTable(file)
        char *file;
/*
 * 'file' (or 'fp') is a WFTable data file as created by writeWFTable().
 * This routine loads and returns the WFtable from 'file',
 * or NULL if there was a problem (unreadable file, bad format).
 */
{
        WFTable *t;
        int f = open(findWFTable(file),0);

        if (f<=0
            || !(t = Alloc(WFTable))
            || read(f,t,sizeof(long)*4) < sizeof(long)*4
            || !(t->text = malloc(t->textSize))
            || read(f,t->text,t->textSize) < t->textSize
            || !(t->table = (long *)malloc(sizeof(long)*t->tableSize))
            || read(f,t->table,sizeof(long)*t->tableSize) < sizeof(long)*t->tableSize
           ){
           Free(t);
           if (t) Free(t->table);
           if (t) Free(t->text);
           t = (WFTable *)0;
        }
        if (f>0) close(f);
        return t;
}

writeWFTable(t, file)
        WFTable *t;
/*
 * Write the WFTable 't' to 'file'.
 * It can be re-read using 'readWFTable()'.
 */
{
        FILE *F = fopen(file, "w");
        int f = F? fileno(F) : 0;
        if (f <= 0) return 0;
        write(f,t,sizeof(long)*4);
        write(f,t->text,t->textSize);
        write(f,t->table,t->tableSize*sizeof(long));
        fclose(F);
        return 1;
}

freeWFTable(t)
        WFTable *t;
{
        if (t){
                Free(t->text);
                Free(t->table);
                Free(t);
        }
}

WFTable *
DefaultLanguageWFTable()
/*
```

## wftable.c                                                                3

```
 * Return the default language frequency table (computer english
 * sampled from novels, dictionaries, computer mail, text files,
 * newswires, and on-line documentation.
 */
{
        static WFTable *t = (WFTable *)0;
        if (!t) t = readWFTable("DefaultEnglish");
        return t;
}

unsigned long
wordStat(word, t, rank)
        register char *word;
        WFTable *t;
        long *rank;
/*
 * Return word count if 'word' occurs in 't', 0 if not.
 * Put the rank of 'word' (if any) in 'rank'.
 */
{
        register char *w;
        long *l;

        if (!t) t = DefaultLanguageWFTable();
        w = t->text + t->table[hashWFTable(word,t)];
        for (; *w; w += strlen(w) + 1 + 2*sizeof(long)){
                if (!strcmp(word,w)){
                        l = (long *)(w + strlen(w) + 1);
                        *rank = *l++;
                        return *l;
                }
        }
        *rank = 0L;
        return 0L;
}

unsigned long
wordRank(word, t)
        register char *word;
        WFTable *t;
/*
 * Return the (1-based) rank of 'word' in table 't',
 * or 0 if it never occurs
 */
{
        long rank;
        (void) wordStat(word,t,&rank);
        return rank;
}

unsigned long
wordCount(word, t)
        register char *word;
        WFTable *t;
/*
 * Return the (1-based) rank of 'word' in table 't',
 * or 0 if it never occurs.
 */
{
        long rank;
        return wordStat(word,t,&rank);
}

float
```

```
wordFrequency(word, t)
        register char *word;
        WFTable *t;
/*
 * Return the frequency of 'word' in 't'
 */
{
        long r;
        if (!t) t = DefaultLanguageWFTable();
        return (float)(((unsigned long)wordCount(word,t))/t->total);
}

wordPeculiarity(s,count,total,t)
        char *s;
        unsigned long count, total;
        WFTable *t;
/*
 * Return an 'index of peculiarity' of 's' --
 * the ratio of its internal frequency (count/total)
 * to its frequency in domain 't'.
 */
{
        unsigned long c, r;
        if (!t) t = DefaultLanguageWFTable();
        c = wordCount(s, t);
        if (c==0) c = 1;
        return (int)((count*t->total)/(c*total));
}

#ifdef notdef
writeWFTableCode(t,file,name)
        WFTable *t;
        char *file, *name;
/*
 * Writes C declarations in 'file' to create a WFTable called 'name'
 */
{
        FILE *f = fopen(file,"w");
        int i,j;
        unsigned char *s;

        if (!f) return 0;
        if (!name) name = file;
        fprintf(f,"#include <wftable.h>\n");

        fprintf(f,"static char s[] = {");
        for (i=0, j=0, s = (unsigned char *)t->text; i<t->textSize; i++, j++, s++){
                if (j%16 == 0){
                        j = 0;
                        fprintf(f,"\n    ");
                }
                fprintf(f,"%03o,", *s);
        }
        fprintf(f,"\n};\n");

        fprintf(f,"static long t[] = {");
        for (i=0, j=0; i<t->tableSize; i++, j++){
                if (j%9 == 0){
                        j = 0;
                        fprintf(f,"\n    ");
                }
                fprintf(f,"%ld, ", t->table[i]);
        }
        fprintf(f,"\n};\n");
```

## wftable.c                                                                    4

```
        fprintf(f,"WFTable %s = {\n", name);
        fprintf(f, "    %ld, %ld, %ld, %ld,\n",
                t->total, t->unique, t->textSize, t->tableSize);
        fprintf(f, "    s, t\n};\n");

        fclose(f);
}
#endif

/*
main(){
        WFTable *t,*u;
        long c,r;
        char s[256];

        t = makeWFTableFromHistogram("foo");
        writeWFTable(t,"foo.x");
        u = readWFTable("foo.x");
        while (gets(s)){
                c = wordStat(s,t,&r); printf("%s: %ld(%ld)\n", s, c, r);
                c = wordStat(s,u,&r); printf("%s: %ld(%ld)\n", s, c, r);
        }
}
*/
```